# EUROPEAN PATENT APPLICATION

(11) **EP 4 307 240 A1**
(43) Date of publication of application: **17.01.2024**
(21) Application number: 22767561.8
(22) Date of filing: 11.03.2022
(51) Int. Cl.: G06T 19/20, G06T 3/40, G06F 3/0484, G06T 11/60

(54) **METHOD FOR IDENTIFYING SELECTION AREA IN ORAL IMAGE AND DEVICE THEREFOR**

(30) Priority: 11.03.2021 KR 20210031871; 10.03.2022 KR 20220030315
(71) Applicant: Medit Corp., Seoul 07207 (KR)
(72) Inventor: YOO, Chang Man, Seoul 07207 (KR)
(74) Representative: Taor, Simon Edward William
(86) International application number: PCT/KR2022/003459
(87) International publication number: WO 2022/191665

(57) **Abstract**

Provided is a method of identifying a selection region in an intraoral image. In detail, provided is a method of identifying a selection region in an intraoral image, including: obtaining the intraoral image; determining a reference point of the intraoral image; determining a brush, based on the reference point and at least one piece of distance information; identifying a region of the intraoral image, which overlaps a region determined by the brush, as the selection region; and displaying the selection region in the intraoral image.

## Description

### Technical Field

Embodiments of the present disclosure relates to a method of identifying a selection region in an intraoral image and an apparatus therefor, and more particularly, to a method of identifying a selection region in a 3-dimensional model for an oral cavity and an apparatus therefor.

### Background Art

The dental computer aided design/design computer aided manufacturing (CAD/CAM) technology is widely used for dental treatment, specifically for treatment such as prosthetics. The most important thing in the dental treatment using CAD/CAM is obtaining elaborate 3-dimensional data for a shape of an object, such as teeth, gums, or jawbones of a patient. During the dental treatment, an accurate calculation may be performed by a computer when the 3-dimensional data obtained from the object is used. For example, to obtain the 3-dimensional data of the object during CAD/CAM treatment processes, a method such as computed tomography (CT), magnetic resonance imaging (MRI), or optical scanning may be used.

A 3-dimensional scanning apparatus is widely used in CAD/CAM fields. The 3-dimensional scanning apparatus may obtain 3-dimensional surface shape information by using light reflected from the object. In detail, 3-dimensional surface data may be recorded in the form of a polygon mesh, and include location information of the tops of the surface of the object and connection relation information of the tops. Alternatively, the 3-dimensional surface data may be recorded in the form of point cloud.

When an intraoral image processing apparatus obtains an intraoral image from scan data, a user may select a region in the intraoral image by using the obtained intraoral image. However, in the related art, a process of identifying a selection region in the intraoral image may consume a lot of time or an unnecessary region may be selected. Accordingly, a technology for accurately determining a region in the intraoral image may be required.

### Disclosure

### Technical Problem

Disclosed embodiments provide a method of identifying a selection region in an intraoral image such that a region in the intraoral image is accurately specified according to a user input, an apparatus for performing operations of the method, and a computer-readable recording medium having stored therein a program or instructions for performing the method.

### Technical Solution

A method of identifying a selection region in an intraoral image, according to an embodiment of the present disclosure, may include: obtaining the intraoral image; determining a reference point of the intraoral image; determining a brush, based on the reference point and at least one piece of distance information; identifying a region of the intraoral image, which overlaps a region determined by the brush, as the selection region; and displaying the selection region in the intraoral image.

### Advantageous Effects

According to a method of identifying a selection region in an intraoral image, an apparatus for performing operations of the method, and a computer-readable recording medium having stored therein a program or instructions for performing the method, according to disclosed embodiments, a user interface screen with increased accuracy of region selection in the intraoral image may be provided by identifying the selection region, based on a reference point and at least one piece of distance information of the intraoral image.

### Description of Drawings

The present disclosure may be easily understood by a combination of the detailed description below and accompanying drawings, and reference numerals denote structural elements.
FIG. 1 is a diagram for describing an intraoral image processing system according to an embodiment.
FIG. 2 is a diagram for describing a method of identifying a selection region in an intraoral image.
FIG. 3 is a block diagram of an apparatus for processing an intraoral image, according to an embodiment.
FIG. 4 is a detailed block diagram of an apparatus for processing an intraoral image, according to an embodiment.
FIG. 5 is a flowchart of a method of identifying a selection region in an intraoral image, according to an embodiment.
FIG. 6 is a flowchart of operations of identifying a region of an intraoral image, which overlaps a region determined by a brush, as a selection region.
FIG. 7 is a reference diagram for describing operations of identifying a selection region in an intraoral image, when a brush is a 2-dimensional brush.
FIG. 8 is a reference diagram for describing operations of identifying a selection region in an intraoral image, when a brush is a 2-dimensional brush.
FIG. 9 is a reference diagram for describing operations of identifying a selection region in an intraoral image, when a brush is a 3-dimensional brush.
FIG. 10 is a reference diagram for describing operations of identifying at least one boundary of a selection region of an intraoral image.
FIG. 11 is a reference diagram for describing an embodiment of identifying at least one object of an intraoral image, based on location information of a reference point.
FIG. 12 is a reference diagram for describing an embodiment of identifying a selection region, further based on a region of the identified at least one object followed by FIG. 11, and an embodiment of displaying a selection region in a different color according to the identified at least one object.
FIG. 13 is a reference diagram for describing an example of identifying at least one object of an intraoral image, based on location information of a reference point.
FIG. 14 is a reference diagram for describing an embodiment of identifying a selection region, further based on a region of the identified at least one object followed by FIG. 13, and an embodiment of displaying a selection region in a different color according to the identified at least one object.
FIG. 15 is a reference diagram for describing an embodiment of displaying a selection region in an intraoral image, when the selection region is identified based on a 3-dimensional brush.
FIG. 16 is a reference diagram for describing an embodiment of displaying a selection region where a hole is displayed, when the hole is in a region identified based on a 3-dimensional brush.

### BEST MODE

According to an aspect of the present disclosure, a method of identifying a selection region in an intraoral image, includes: obtaining the intraoral image; determining a reference point of the intraoral image; determining a brush, based on the reference point and at least one piece of distance information; identifying a region of the intraoral image, which overlaps a region determined by the brush, as the selection region; and displaying the selection region in the intraoral image.

The identifying of the selection region may include: identifying at least one boundary where the region determined by the brush and the intraoral image overlap each other, based on location information of a plurality of points of the region determined by the brush and location information of a plurality of points of the intraoral image; and identifying the selection region, based on the at least one boundary.

When the brush is a 2-dimensional brush, the region determined by the brush may include a region obtained by extending the 2-dimensional brush in a normal direction of a display.

The selection region may include the at least one boundary and a region of the intraoral image, which is located within the identified at least one boundary.

The displaying of the selection region may include displaying the selection region by emphasizing at least one boundary of the selection region.

The displaying of the selection region by emphasizing the at least one boundary of the selection region may include displaying the at least one boundary of the selection region in a pre-set color, wherein a region of the intraoral image, which is located within the at least one boundary, may be displayed by overlapping or blending a color of the intraoral image and the pre-set color.

The identifying of the selection region may include: identifying at least one object of the intraoral image, based on location information of the reference point; and identifying the selection region, further based on a region of the identified at least one object.

The displaying of the selection region may include: identifying at least one object of the intraoral image, which is included in the selection region; and displaying the selection region in a different color according to the at least one object.

The at least one piece of distance information may include information about a distance between the reference point and another point of the intraoral image.

According to another aspect of the present disclosure, an apparatus for processing an intraoral image, includes: a display displaying an intraoral image; a memory storing one or more instructions; and at least one processor configured to execute the one or more instructions to: obtain the intraoral image; determine a reference point of the intraoral image; determine a brush, based on the reference point and at least one piece of distance information; identify a region of the intraoral image, which overlaps a region defined by the brush, as a selection region; and control the display to display the selection region of the intraoral image.

According to another aspect of the present disclosure, a computer-readable recording medium has recorded thereon a program for executing the method above on a computer.

### Mode for Invention

The present specification describes the principles of the present disclosure and discloses embodiments such that the scope of right of the present disclosure is clarified and one of ordinary skill in the art may practice the present disclosure. The embodiments may be implemented in various forms.

Throughout the specification, like reference numerals denote like elements. The present specification does not describe all elements of the embodiments, and generic content in the technical field of the present disclosure or redundant content of the embodiments is omitted. The term "part" or "portion" used in the specification may be implemented by software or hardware, and according to embodiments, a plurality of "parts" or "portions" may be implemented as one unit or element, or alternatively, one "part" or "portion" may include a plurality of units or elements. Hereinafter, operation principles and embodiments of the present disclosure will be described with reference to accompanying drawings.

In the present specification, an object is a target to be photographed, and may include a person, an animal, or a portion thereof. For example, the object may include a part (a viscera or an organ) of a body, an artificial structure attachable to or insertable into the object, or a phantom. For example, the object may include a tooth, a gum, at least a portion of an oral cavity, and/or an artificial structure (e.g., an orthodontic device including a bracket and a wire, an implant, an artificial tooth, a tooth restoration including inlay or onlay, an orthodontic aid inserted into an oral cavity) insertable into an oral cavity, or a tooth or gum to which an artificial structure is attached.

In the present disclosure, an intraoral image may denote a 2-dimensional (2D) image of an object or a 3-dimensional (3D) image showing an object in three dimensions. In detail, an image may include an image (hereinafter, referred to as an intraoral image) showing at least one tooth or an oral cavity including at least one tooth. In the present disclosure, an intraoral image may include both a 2D frame or a 3D frame. For example, an intraoral image may include a 2D frame including 2D images of an object obtained at different time points, and a 3D frame represented in the form of a point cloud or a polygon mesh.

Also, in the present disclosure, data may denote information required to represent an object in two dimensions or 3 dimensions, for example, raw data obtained from at least one image sensor. In detail, raw data may be data obtained to generate an intraoral image and may be data (e.g., 2D data) obtained from at least one image sensor included in an intraoral scanner when scanning an oral cavity of a patient, which is an object, by using the intraoral scanner. Raw data obtained by an intraoral scanner may be referred to as scan data or 2D image data.

Hereinafter, embodiments will be described in detail with reference to accompanying drawings.

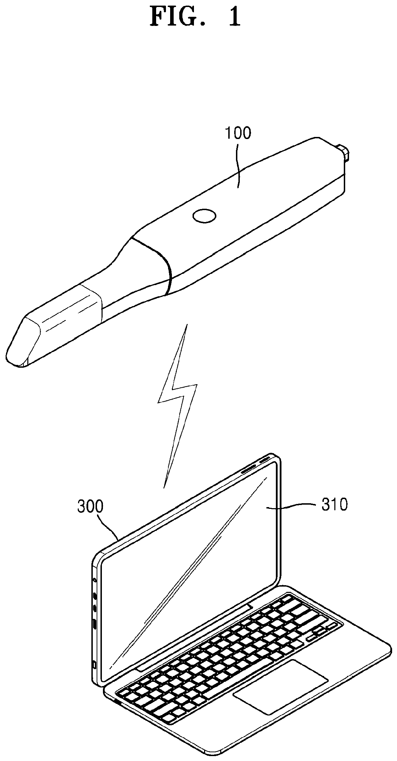

FIG. 1 is a diagram for describing an intraoral image processing system according to an embodiment.

As shown in FIG. 1, the intraoral image processing system according to an embodiment of the present disclosure may include a scanner 100 and an intraoral image processing apparatus 300.

The scanner 100 according to an embodiment of the present disclosure is a medical device for obtaining an image in an oral cavity. In detail, the scanner 100 may be a device for obtaining an image of an oral cavity including at least one tooth by being inserted into the oral cavity and scanning the at least one tooth in a non-contact manner. Also, the scanner 100 may have a shape capable of being introduced into and extracted from the oral cavity, and scan the inside of the oral cavity of a patient by using at least one image sensor (e.g., an optical camera). The scanner 100 may obtain, as 2D image data, surface information of an object so as to obtain an image of at least one surface from among a tooth, a gum, and an artificial structure (e.g., an orthodontic appliance including a bracket and a wire, an implant, an artificial tooth, or an orthodontic aid inserted into an oral cavity) insertable into the oral cavity that is the object. The 2D image data obtained by the scanner 100 may be raw data obtained to generate an intraoral image. In FIG. 1, the scanner 100 is illustrated as an intraoral scanner having a shape to be introduced into the oral cavity, but the scanner 100 applied to embodiments of the present disclosure may include a model scanner configured to scan a tooth model.

The 2D image data obtained by the scanner 100 according to an embodiment of the present disclosure may be transmitted to the intraoral image processing apparatus 300 connected to the scanner 100 through a wired or wireless communication network. The intraoral image processing apparatus 300 is connected to the scanner 100 through the wired or wireless communication network, and may receive, from the scanner 100, the 2D image data obtained by scanning the oral cavity. The intraoral image processing apparatus 300 may generate a 3D intraoral image, according to embodiments below.

According to an embodiment of generating the 3D intraoral image, the scanner 100 may transmit the raw data obtained through the oral cavity scanning to the intraoral image processing apparatus 300 or transmit the raw data after processing the raw data. The intraoral image processing apparatus 300 may generate the 3D intraoral image indicating the oral cavity in three dimensions, according to the received raw data. The 3D intraoral image may be generated by modeling an internal structure of the oral cavity in three dimensions, based on the received raw data, and thus the 3D intraoral image may also be referred to as a 3D model, an intraoral 3D model, a 3D intraoral model, or a 3D intraoral image. Hereinafter, a model or image indicating the oral cavity in two dimensions or three dimensions will be collectively referred to as an intraoral image. According to another embodiment of generating the 3D intraoral image, the scanner 100 may obtain the raw data through the oral cavity scanning, and generate an image corresponding to the oral cavity that is the object by processing the obtained raw data. The scanner 100 may transmit the intraoral image generated according to the oral cavity, to the intraoral image processing apparatus 300.

The intraoral image processing apparatus 300 according to an embodiment of the present disclosure may be any electronic device capable of generating, processing, displaying, and/or transmitting the intraoral image, based on the 2D image data received from the scanner 100. In detail, the intraoral image processing apparatus 300 may generate at least one of information generated by processing the 2D image data and the intraoral image generated by processing the 2D image data, and display at least one of the generated information and the intraoral image through a display 310. The intraoral image processing apparatus 300 is an apparatus for analyzing, processing, displaying, and/or transmitting a received image, and may be a computing device such as smartphone, a laptop computer, a desktop computer, a personal digital assistance (PDA), or a table personal computer (PC), but is not limited thereto. For example, the intraoral image processing apparatus 300 may be in the form of a server (or a server device) for processing the intraoral image.

Also, the intraoral image processing apparatus 300 according to an embodiment of the present disclosure may store and execute dedicated software interworking with the scanner 100. Here, the dedicated software may be referred to as a dedicated program or a dedicated application. When the intraoral image processing apparatus 300 operates by interworking with the scanner 100, the dedicated software stored in the intraoral image processing apparatus 300 may be connected to the scanner 100 and receive, in real time, data obtained through object scanning. The dedicated software may be stored in a memory of the intraoral image processing apparatus 300.

Also, the dedicated software may provide a user interface for using data obtained by the scanner 100. A user interface screen provided by the dedicated software may include the intraoral image or 3D model. The intraoral image processing apparatus 300 may display, on the display 310, a selection region identified according to a reference point of the intraoral image and at least one piece of distance information, by using the dedicated software.

According to an embodiment, the intraoral image processing apparatus 300 is an electronic device that may generate the intraoral image indicating the oral cavity including one or more teeth in three dimensions, and display, through the display 310, the intraoral image including the selection region, as will be described in detail below.

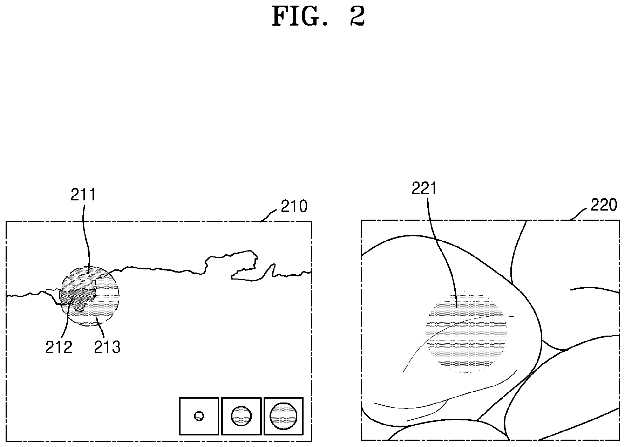

FIG. 2 is a diagram for describing a method of identifying a selection region in an intraoral image.

Referring to FIG. 2, in the related art, a user may perform mouseover or hover on an intraoral image 210 by using a graphics tool called a brush so as to select a region 211 of the intraoral image 210, and an intraoral image processing apparatus may, when the user clicks while the brush is located or moved, output a screen including graphics pre-showing a selection region determined by a region where the brush is located or passes.

The brush has a uniform size and shape, and thus the region 211 selected by the brush may include, in addition to a region to be actually selected by the user using the brush, a region 212 corresponding to a rear gum or a region 213 where point data of a 3D model does not exist, depending on the size or shape of the brush. In this regard, the region 212 and the region 213 may be unnecessarily selected regions, and according to the related art, there is an issue that an unnecessary region is set while identifying a selection region in a 3D image.

In addition, referring to FIG. 2, in the related art, despite that an intraoral image 220 is a 3D intraoral image or a 3D intraoral model, a selection region 221 may be displayed as if it is in two dimensions. In this regard, according to the related art, there is an issue that, despite that the intraoral image 220 is a 3D image, a selection region is displayed in 2 dimensions while identifying the selection region in the 3D image, and thus it may be difficult to accurately select the selection region.

Accordingly, the intraoral image processing apparatus 300 according to various embodiments of the present disclosure proposes a method of identifying and displaying a selection region to be selected by a user at a high speed and high accuracy.

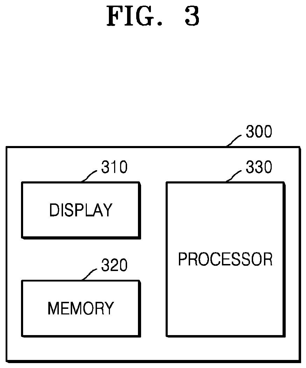

FIG. 3 is a block diagram of an apparatus for processing an intraoral image, according to an embodiment.

The intraoral image processing apparatus 300 according to an embodiment of the present disclosure may be an electronic device for processing an intraoral image and displaying the processed intraoral image. The intraoral image processing apparatus 300 according to an embodiment of the present disclosure may include the display 310, a memory 320, and a processor 330. Hereinafter, the above components will be described.

The display 310 may display a screen and display a certain screen according to control by the processor 330. The display 310 may include a display panel and a controller (not shown) configured to control the display panel, and the display 310 may indicate a display embedded in the intraoral image processing apparatus 300. The display panel may be realized as a display in any form, such as a liquid crystal display (LCD), an organic light-emitting diode (OLED) display, an active-matrix OLED (AM-OLED) display, or a plasma display panel (PDP). The display panel may be flexible, transparent, or wearable. The display 310 may be provided as a touch screen in which a user input unit (not shown) and a touch panel are combined. For example, the touch screen may include an integrated module in which the display panel and the touch panel are combined in a stack structure.

The display 310 according to an embodiment of the present disclosure may display a screen, and display a certain screen according to control by the processor 330. In detail, the display 310 may display a user interface screen including an intraoral image generated based on data obtained by the scanner 100 by scanning an oral cavity of a patient. The display 310 may display the user interface screen including information related to a dental treatment of the patient. Also, for example, the display 310 may provide, to a user, a user interface screen including a selection region, by displaying a 3D intraoral model in which a region selected by the user is displayed.

The memory 320 may store programs for processes and controls by the processor 330. The memory 320 according to an embodiment of the present disclosure may store one or more instructions.

The processor 330 may control operations of the intraoral image processing apparatus 300 in general, and control operations of the intraoral image processing apparatus 300 by executing the one or more instructions stored in the memory 320.

The processor 330 according to an embodiment of the present disclosure may execute the one or more instructions stored in the memory 320 to obtain an intraoral image, determine a reference point of the intraoral image, determine a brush, based on the reference point and at least one piece of distance information, identify, as a selection region, a region of the intraoral image, which overlaps a region determined by the brush, and control the display 310 to display the selection region of the intraoral image.

The processor 330 according to an embodiment of the present disclosure may execute the one or more instructions stored in the memory 320 to identify at least one boundary where the region defined by the brush and the intraoral image overlap each other, based on location information of a plurality of points in the region defined by the brush and location information of a plurality of points of the intraoral image, and identify the selection region, based on the at least one boundary.

The processor 330 according to an embodiment of the present disclosure may execute the one or more instructions stored in the memory 320 to control the display 310 to display the selection region by emphasizing at least one boundary of the selection region.

The processor 330 according to an embodiment of the present disclosure may execute the one or more instructions stored in the memory 320 to control the display 310 to display the at least one boundary of the selection region in a pre-set color, wherein a region of the intraoral image, which is located within the at least one boundary, may be displayed by overlapping or blending a color of the intraoral image and the pre-set color.

The processor 330 according to an embodiment of the present disclosure may execute the one or more instructions stored in the memory 320 to identify at least one object of the intraoral image, based on location information of the reference point, and identify the selection region, further based on a region of the identified at least one object.

The processor 330 according to an embodiment of the present disclosure may execute the one or more instructions stored in the memory 320 to identify at least one object of the intraoral image, which is included in the selection region, and control the display 310 to display the selection region in a different color according to the at least one object.

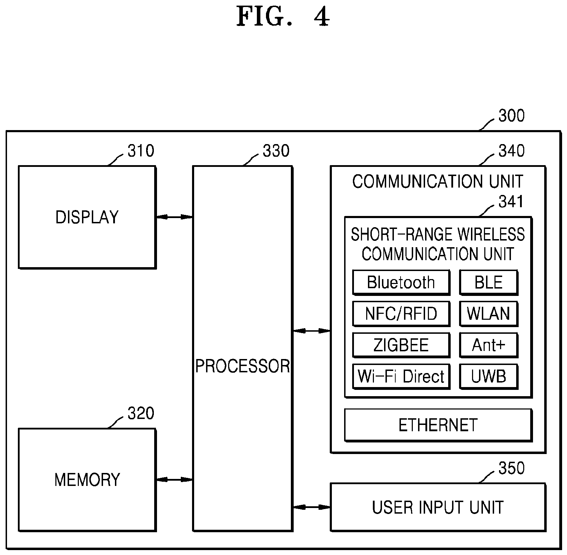

However, not all of the components shown are essential components. The intraoral image processing apparatus 300 may be implemented by more or fewer components than those illustrated. For example, as shown in FIG. 4, the intraoral image processing apparatus 300 may include the display 310, the memory 320, the processor 330, a communication unit 340, and a user input unit 350.

FIG. 4 is a detailed block diagram of an apparatus for processing an intraoral image, according to an embodiment.

The intraoral image processing apparatus 300 according to an embodiment of the present disclosure may be an electronic device for processing an intraoral image and displaying the processed intraoral image. The intraoral image processing apparatus 300 may be a computing device, such as a smartphone, a laptop computer, a desktop computer, a PDA, or a tablet PC, but is not limited thereto. Also, the intraoral image processing apparatus 300 may further include, in addition to the display 310, the memory 320, and the processor 330, the communication unit 340 and the user input unit 350. Hereinafter, the above components will be described. Descriptions about the display 310 are the same as those described in FIG. 2, and thus are not provided again.

The memory 320 may store programs for processes and controls by the processor 330. The memory 320 according to an embodiment of the present disclosure may store one or more instructions. The memory 320 may include at least one of an internal memory (not shown) and an external memory (not shown). The memory 320 may store various programs and data used for operations of the intraoral image processing apparatus 300. For example, the memory 320 may store a generated 3D intraoral image or store raw data or 2D image data obtained from the scanner 100. Also, the memory 320 may store dedicated software linked to the scanner 100. Here, the dedicated software may be a program or application for providing a user interface for using data obtained by the scanner 100. Also, the memory 320 may store location information of tops of at least one object surface of the 3D intraoral image from the scanner 100, and connection relation information of the tops. In detail, the memory 320 may store surface data in the form of point cloud, and the point cloud may include the location information of the tops of the object surface and the connection relation information of the tops.

The memory 320 may include information for distinguishing at least one object of the 3D intraoral image. For example, the memory 320 may include color information of the at least one object of the 3D intraoral image. Also, the memory 320 may store color information for displaying a selection region. Also, the memory 320 may determine at least one piece of distance information used to determine a brush. Here, the at least one piece of distance information may indicate information about a distance between a reference point and another point of the 3D intraoral image.

The internal memory may include, for example, at least one of volatile memory (e.g., dynamic random access memory (RAM), static RAM (SRAM), or synchronous DRAM (SDRAM)), nonvolatile memory (e.g., one-time programmable read-only memory (ROM) (OTPROM), programmable ROM (PROM), erasable and programmable ROM (EPROM), electrically erasable and programmable ROM (EEPROM), mask ROM, or flash ROM), hard disk drive, and solid-state drive (SSD). According to an embodiment, the processor 330 may load a command or data received from at least one of a nonvolatile memory and another component on a volatile memory, and process the same. Also, the processor 330 may store data received from or generated by another component, in a nonvolatile memory.

The external memory may include, for example, at least one of compact flash (CF), secure digital (SD), micro-SD), mini-SD, extreme digital (xD), and memory stick.

The processor 330 may include at least one of RAM, ROM, central processing unit (CPU), a graphics processing unit (GPU), and a bus. RAM, ROM, CPU, and GPU may be connected to each other through a bus.

According to an embodiment of the present disclosure, the processor 330 may include an artificial intelligence dedicated processor configured to identify, as a selection region, a region of an intraoral image, which overlaps a region determined by a brush. The artificial intelligence dedicated processor may be controlled to process input data or designed in a hardware structure specialized for processing of a specific artificial intelligence model, according to an artificial intelligence model or a pre-defined operating rule stored in a memory.

The pre-defined operating rule or artificial intelligence model may be generated through learning, and being generated through learning denotes that the pre-defined operating rule or artificial intelligence model, which is configured to perform a desired feature (or purpose), is generated as a base artificial intelligence model is trained by using a plurality of pieces of training data according to a learning algorithm. Such a training process may be performed by a device for performing Al according to the present disclosure, or by a separate server and/or system.

The communication unit 340 may communicate with at least one external electronic device through a wired or wireless communication network. In detail, the communication unit 340 may communicate with the scanner 100 according to control by the processor 330. The communication unit 340 may include one or more components enabling communication between the intraoral image processing apparatus 300 and a server or a plurality of devices located around the intraoral image processing apparatus 300. The communication unit 340 may include one or more components enabling communication between the intraoral image processing apparatus 300 and a server. Also, the communication unit 340 may include a short-range wireless communication unit 341.

The short-range wireless communication unit 341 may include a Bluetooth communication unit, a Bluetooth low energy (BLE) communication unit, a near field communication unit, a WLAN (Wi-Fi) communication unit, a Zigbee communication unit, an infrared data association (IrDA) communication unit, a Wi-Fi direct (WFD) communication unit, an ultra-wideband (UWB) communication unit, or an Ant+ communication unit, but is not limited thereto.

Also, the communication unit 340 may further include a long-range communication module performing communication with a server for supporting long-range communication according to the long-range communication standard. In particular, the communication unit 340 may include the long-range communication module performing communication through a network for Internet communication. Also, the communication unit 340 may include the long-range communication module performing communication through a communication network according to the communication standard, such as third generation (3G), fourth generation (4G), and/or fifth generation (5G). Also, the communication unit 340 may include at least one port to be connected to an external electronic device (e.g., an intraoral scanner) through a wired cable, to communicate with the external electronic device via wires. Accordingly, the communication unit 340 may communicate with the external electronic device connected thereto via wires through the at least one port.

The communication unit 340 according to an embodiment of the present disclosure may receive data obtained from the scanner 100 according to control by the processor 330, for example, raw data obtained through oral cavity scanning.

The user input unit 350 may receive various instructions from a user, and the user input unit 350 may denote a unit configured to receive data for the user to control the intraoral image processing apparatus 300. The user input unit 350 may include at least one of a key pad, a dome switch, a touch pad (contact capacitance type, pressure resistive type, an infrared detection type, surface ultrasonic wave conduction type, integral tension measuring type, piezo-effect type, or the like), a jog wheel, and a jog switch, but is not limited thereto. A key pad may include any type of key, such as a mechanical button or a wheel, which is formed on various regions of the intraoral image processing apparatus 300, such as a front portion, a side portion, or a rear portion of the outside of a main body. A touch panel may detect a touch input of the user and output a touch event value corresponding to a detected touch signal. When the touch panel is configured as a touch screen (not shown) by being combined with a display panel, the touch screen may be embodied as any type of touch sensor, such as an electrostatic type, a pressure resistive type, or a piezoelectric type.

In detail, the user input unit 350 may include a touch panel for detecting a touch of the user, a button for receiving push manipulation of the user, and a user input device including a keyboard or a mouse for designating or selecting one point on a user interface screen, but is not limited thereto. The user input unit 350 may include a voice recognition device for voice recognition. For example, the voice recognition device may be a microphone and may receive the user's voice command or voice request. Accordingly, the processor 330 may control an operation corresponding to the voice command or voice request to be performed.

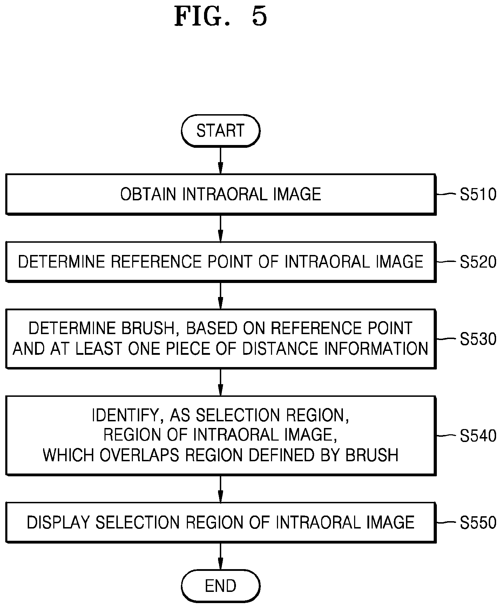

FIG. 5 is a flowchart of a method of identifying a selection region in an intraoral image, according to an embodiment.

Referring to FIG. 5, in operation S510, an intraoral image processing apparatus according to an embodiment of the present disclosure may obtain an intraoral image.

According to an embodiment of the intraoral image processing apparatus obtaining the intraoral image, the scanner 100 may transmit raw data obtained through oral cavity scanning to the intraoral image processing apparatus 300 and the intraoral image processing apparatus 300 may generate or obtain an intraoral image by processing the received raw data. The generated intraoral image is a 3D intraoral image and may be generated by three-dimensionally modeling an internal structure of an oral cavity, based on the raw data.

According to another embodiment of the intraoral image processing apparatus obtaining the intraoral image, the scanner 100 may obtain the raw data through the oral cavity scanning and generate an image corresponding to the oral cavity that is an object by processing the obtained raw data. The scanner 100 may transmit, to the intraoral image processing apparatus 300, the unprocessed raw data and the image generated based on the raw data together. Accordingly, the intraoral image processing apparatus 300 may obtain the intraoral image from the scanner 100, but an embodiment is not limited thereto.

Also, the intraoral image processing apparatus 300 may store the generated intraoral image in the memory 320 of the intraoral image processing apparatus 300, and then when a command regarding region determination in the intraoral image is received from a user, the intraoral image processing apparatus 300 may use the intraoral image stored in the memory 320. Also, the intraoral image of the present disclosure may denote an intraoral image of the user's oral cavity, which is generated from a scan image of the user's oral cavity captured in real time.

In operation S520, the intraoral image processing apparatus according to an embodiment of the present disclosure may determine a reference point of the intraoral image.

The intraoral image processing apparatus 300 according to an embodiment of the present disclosure may receive a user input through the user input unit 350, and determine a reference point of the intraoral image output on a user interface screen by using the user input.

For example, the user may select the reference point of the intraoral image through the user input unit 350. In detail, the user may use the user input unit 350 including a mouse or a keyboard so as to select one point on the user interface screen output on the display 310. Accordingly, when the user clicks or performs a pre-set operation at one point on the user interface screen, the intraoral image processing apparatus 300 may determine the one point on the user interface screen as the reference point of the intraoral image. Also, when the user performs a plurality of pre-set operations at a plurality of points on the user interface screen, the intraoral image processing apparatus 300 may determine the plurality of points on the user interface screen as a plurality of reference points of the intraoral image.

The reference point may be a point where a vector identified based on a mouse pointer on the user interface screen and the intraoral image on the user interface screen meet, and the reference point may include a plurality of points. In detail, the identified vector may denote a vector in a normal direction of the user interface screen from among vectors passing the mouse pointer on the user interface screen. Also, the reference point of the present disclosure may denote a point where a determined vector and the intraoral image on the user interface screen initially meet. Alternatively, the reference point of the present disclosure may denote at least one point directly displayed on the user interface screen from among points where the determined vector and the intraoral image on the user interface screen meet, but is not limited thereto. The reference point of the present disclosure may refer to both one reference point and a plurality of points.

In operation S530, the intraoral image processing apparatus according to an embodiment of the present disclosure may determine a brush, based on the reference point and at least one piece of distance information.

The brush according to an embodiment of the present disclosure may include both a 2D brush and a 3D brush. For example, the 2D brush may denote a circle, an oval, or a quadrangle, and the 3D brush may denote a sphere or an ellipsoid, but are not limited thereto.

The intraoral image processing apparatus 300 according to an embodiment of the present disclosure may determine a brush, based on the reference point and at least one piece of distance information. The at least one piece of distance information may denote information about a distance between the reference point and another point of the intraoral image. Also, for example, the at least one piece of distance information may denote information about a distance between reference points, but is not limited thereto.

Pre-set distance information may be variously determined. The pre-set distance information may be determined according to a default value determined in a system or a user input for changing a size of the brush.

When the brush is a sphere 3D brush, the intraoral image processing apparatus 300 may identify the reference point determined by the user as a center of a sphere and identify the pre-set distance information as a radius of the sphere, thereby determining the sphere 3D brush. When the brush is an ellipsoid 3D brush, the intraoral image processing apparatus 300 may identify the reference point determined by the user as a center of the ellipsoid and determine an x-axis semiprincipal axis, a y-axis semiprincipal axis, and a z-axis semiprincipal axis according to a plurality of pieces of pre-set distance information, thereby determining the ellipsoid 3D brush.

In operation S540, the intraoral image processing apparatus according to an embodiment of the present disclosure may identify a region of the intraoral image, which overlaps a region determined by the brush, as a selection region.

When the brush is a 2D brush, the region determined by the brush may denote a region obtained by extending the 2D brush in a normal direction of a display. When the brush is a 3D brush, the region determined by the brush may denote a surface region of the 3D brush.

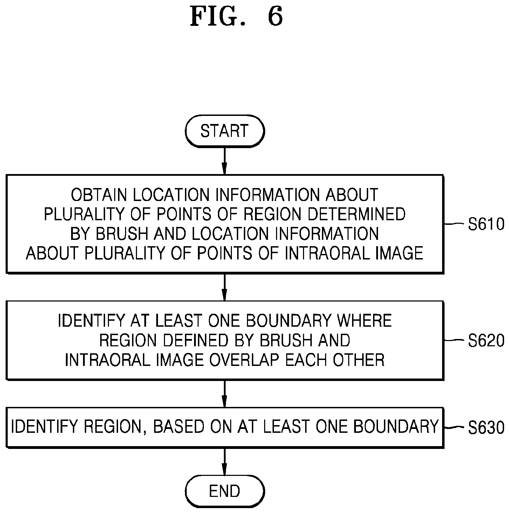

The intraoral image processing apparatus 300 according to an embodiment of the present disclosure may determine at least one boundary where the region determined by the brush and the intraoral image overlap each other, based on location information about a plurality of points of the region determined by the brush and location information about a plurality of points of the intraoral image. Also, the intraoral image processing apparatus 300 according to an embodiment of the present disclosure may identify a selection region of the intraoral image, based on the identified at least one boundary. A detailed operation of identifying the selection region in the intraoral image will be described in detail below with reference to FIGS. 6 to 9.

In operation S550, the intraoral image processing apparatus according to an embodiment of the present disclosure may display the selection region of the intraoral image.

The intraoral image processing apparatus 300 according to an embodiment of the present disclosure may display, through the display 310, the intraoral image where an identified region is displayed. The intraoral image processing apparatus 300 may display the selection region by emphasizing the at least one boundary of the selection region such that the user may clearly recognize and distinguish the selection region of the intraoral image. In the present disclosure, the selection region may be distinguished as the at least one boundary and a region of the intraoral image located inside the at least one boundary. The at least one boundary may denote a region including the vicinity of the boundary located outside the selection region and the region of the intraoral image located inside the at least one boundary may denote a region in the intraoral image excluding the at least one boundary from the selection region.

According to an embodiment of displaying the selection region by emphasizing the at least one boundary of the selection region, the intraoral image processing apparatus 300 may display the at least one boundary of the selection region in a pre-set color and display the region of the intraoral image located within the at least one boundary by overlapping or blending a color of the intraoral image and the pre-set color. In addition, the intraoral image processing apparatus 300 may output a pre-set region located outside the at least one boundary in a pre-set color, and the intraoral image processing apparatus 300 may further appropriately display the selection region and provide the same to the user.

FIG. 6 is a flowchart of operations of identifying the region of the intraoral image, which overlaps the region determined by the brush, as the selection region.

In operation S610, the intraoral image processing apparatus according to an embodiment of the present disclosure may obtain the location information about the plurality of points of the region determined by the brush and the location information about the plurality of points of the intraoral image.

In the present disclosure, the location information about the plurality of points of the intraoral image may include location information of points located on a surface of at least one object of the intraoral image and/or connection relation information between the points.

When the brush according to an embodiment of the present disclosure is a 3D brush, the location information about the plurality of points of the region determined by the brush may denote location information of points located on a surface of the 3D brush. When the brush is a 2D brush, the intraoral image processing apparatus 300 may identify a 3D figure obtained by projecting the brush on the user interface screen in a normal direction, and the location information about the plurality of points of the region determined by the brush may denote location information of points located on a surface of the identified 3D figure. In the present disclosure, the location information may be stored in the memory 320 of the intraoral image processing apparatus 300, and the intraoral image processing apparatus 300 may use the location information stored in the memory 320 to identify the selection region.

Accordingly, the intraoral image processing apparatus 300 may accurately determine a region where the region determined by the brush and the at least one object of the intraoral image overlap each other, by obtaining the location information about the plurality of points of the region determined by the brush and the location information about the plurality of points of the intraoral image.

In operation S620, the intraoral image processing apparatus according to an embodiment of the present disclosure may identify the at least one boundary where the region determined by the brush and the intraoral image overlap each other.

The intraoral image processing apparatus 300 according to an embodiment of the present disclosure may identify at least one point where the location information about the plurality of points of the region determined by the brush and the location information about the plurality of points of the intraoral image match each other. In detail, the location about the plurality of points of the region determined by the brush and the location information about the plurality of points of the intraoral image matching each other may indicate that the location about the plurality of points of the region determined by the brush is identical to the location about the plurality of points of the intraoral image in an x-axis, a y-axis, and a z-axis of the intraoral 3D model. Also, the location information about the plurality of points of the region determined by the brush and the location information about the plurality of points of the intraoral image matching each other may indicate that distances between the plurality of points of the region determined by the brush and the plurality of points of the intraoral image are a pre-set threshold value or less, but is not limited thereto.

In operation S630, the intraoral image processing apparatus according to an embodiment of the present disclosure may identify the selection region of the intraoral image, based on the at least one boundary.

The intraoral image processing apparatus 300 according to an embodiment of the present disclosure may identify the selection region of the intraoral image according to the at least one boundary. In detail, the intraoral image processing apparatus 300 may identify a plurality of points surrounded by the at least one boundary from among at least the plurality of points of the intraoral image. Accordingly, the intraoral image processing apparatus 300 may identify, as the selection region of the intraoral image, the plurality of points identified to be surrounded by the at least one boundary and the region including the at least one boundary identified in operation S620.

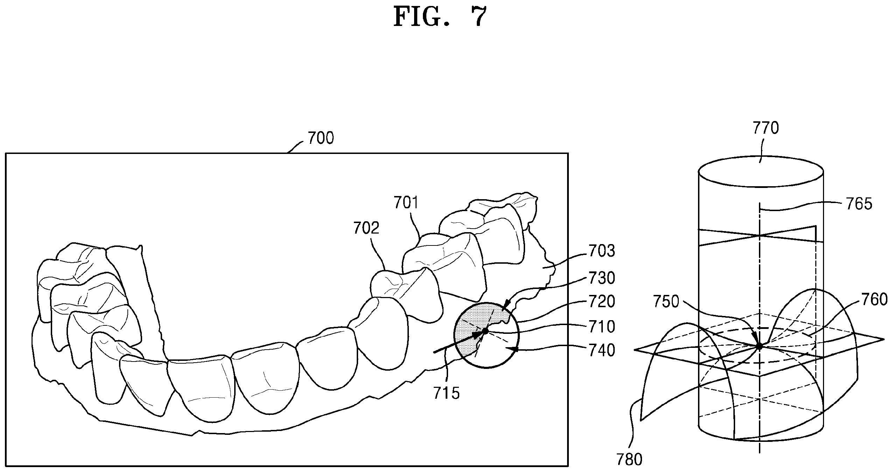

FIG. 7 is a reference diagram for describing the operations of identifying the selection region in the intraoral image, when the brush is a 2D brush.

Referring to FIG. 7, an embodiment of identifying a selection region 730 in an intraoral image 700 according to a 2D brush 720 of the intraoral image 700 is illustrated.

The intraoral image 700 displayed on the display 310, according to an embodiment of the present disclosure, may include objects, such as teeth including a tooth 701 and a tooth 702, and a gum 703, and the intraoral image processing apparatus 300 may store location information about the at least one object included in the intraoral image 700 and color information about the at least one object. On the other hand, there may be no point data including location information or color information, for a region of the intraoral image 700 where there is no separate object. Accordingly, a selection region in an intraoral image may exclude a region where there is no point data.

The 2D brush 720 according to an embodiment of the present disclosure may be determined based on a reference point 710 and at least one piece of distance information. In detail, the intraoral image processing apparatus 300 may identify a 3D region generated as the 2D brush 720 is expanded, by projecting the 2D brush 720 determined based on the reference point 710 located on the gum 703 and the at least one piece of distance information, in a normal direction 715. In the present disclosure, a 3D region generated as a 2D brush is expanded may be referred to as a region determined by the 2D brush.

In detail, a 3D region 770 generated as a 2D brush 760 is expanded will described. The 2D brush 760 may be determined based on a reference point 750 located on an object 780 of an intraoral image and distance information stored in the memory 320. The 2D brush 760 may be a circle shaped brush. The 3D region 770 generated as the 2D brush 760 is expanded may be obtained by expanding the 2D brush 760 in a direction of a normal vector 765. Also, a selection region in the object 780 may denote a region where the object 780 and the 3D region 770 generated as the 2D brush 760 is expanded overlap each other.

The intraoral image processing apparatus 300 may identify the selection region 730, based on location information about a plurality of points of a region determined by the 2D brush 720 and location information about a plurality of points of the intraoral image 700. Also, the selection region 730 may not include a region 740 without point data.

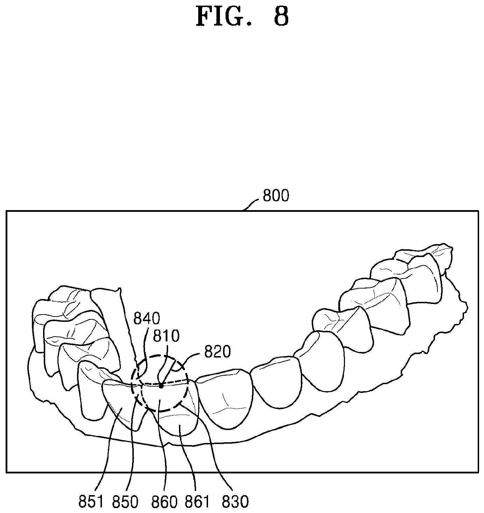

FIG. 8 is a reference diagram for describing the operations of identifying the selection region in the intraoral image, when the brush is a 2D brush.

Referring to FIG. 8, an embodiment of identifying a selection region in an intraoral image 800 according to a 2D brush 820 of the intraoral image 800 is illustrated.

Referring to FIG. 8, the intraoral image processing apparatus 300 according to an embodiment of the present disclosure may identify the 2D brush 820, based on a reference point 810 of the intraoral image 800 and a distance 820 according to pre-set distance information. The intraoral image processing apparatus 300 may set, as the selection region in the intraoral image 800, a region where a 3D model obtained by expanding the 2D brush 820 and the intraoral image 800 overlap each other. For example, the selection region of the intraoral image 800 may include a region 850 that is a partial region of a tooth 851 and a region 860 that is a partial region of a tooth 861. Also, the selection region of the intraoral image 800 may include a region 840 that is a partial region of a gum. Here, considering that a region selected by the user may be limited to a tooth because the reference point 810 is located at the tooth 861 from among objects, it may be appropriate that the region 850 and the region 860 may be included in the selection region of the intraoral image 800. On the other hand, considering that the region selected by the user may be limited to the tooth because the reference point 810 selected by the user through the user input unit 350 is located at the tooth 861, it may be further appropriate that the region 840 that is a partial region of the gum may not be included in the selection region of the intraoral image 800.

Here, the intraoral image processing apparatus 300 according to an embodiment of the present disclosure may change a type of the brush to a 3D brush. The intraoral image processing apparatus 300 may identify the selection region of the intraoral image, which is further appropriate to the user, and display the same on the display 310. Here, an operation by which the intraoral image processing apparatus 300 changes the type of the brush to a 3D brush may include an operation of proposing to change the type of the brush to a 3D brush. Accordingly, when the intraoral image processing apparatus 300 changes the type of the brush to a 3D brush, a changed region in the intraoral image 800 may not include the region 840 that is a partial region of a gum. The intraoral image processing apparatus 300 may provide the changed selection region of the intraoral image 800 to the user.

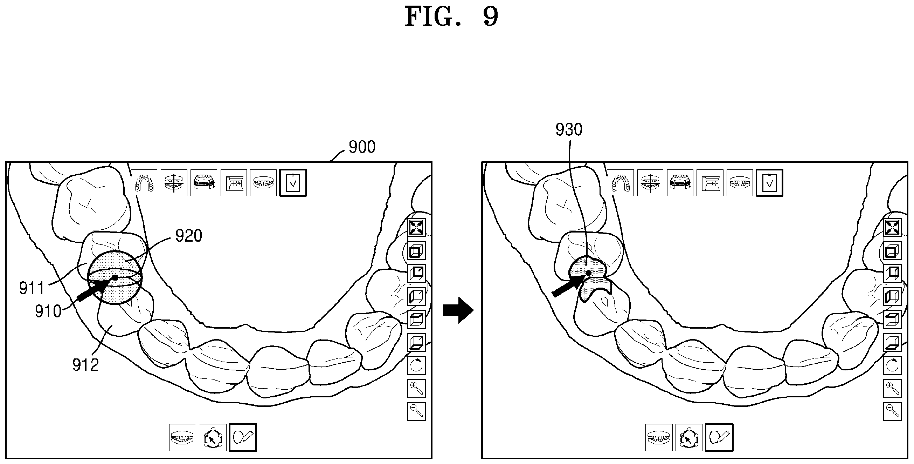

FIG. 9 is a reference diagram for describing the operations of identifying the selection region in the intraoral image, when the brush is a 3-dimensional brush.

Referring to FIG. 9, an embodiment of identifying a selection region 930 in an intraoral image 900 according to a 3D brush 920 of the intraoral image 900 is illustrated.

The intraoral image 900 displayed on the display 310, according to an embodiment of the present disclosure, may include objects, such as teeth including a tooth 911 and a tooth 912, and a gum. The intraoral image processing apparatus 300 may determine a reference point of the intraoral image 900 according to a user input. Referring to FIG. 9, the intraoral image processing apparatus 300 may determine a reference point 910 of the intraoral image 900 according to a user input. In detail, the reference point 910 may correspond to a point located on a surface of the tooth 911 from among the objects.

The intraoral image processing apparatus 300 according to an embodiment of the present disclosure may determine the 3D brush 920, based on the reference point 910 of the intraoral image 900 and at least one piece of distance information. Referring to FIG. 9, the intraoral image processing apparatus 300 may determine a radius of the 3D brush 920, based on the at least one piece of distance information. Accordingly, the intraoral image processing apparatus 300 may identify the 3D brush 920 by determining the radius of the 3D brush 920, based on the at least one piece of distance information with the reference point 910 as a center of a sphere.

The intraoral image processing apparatus 300 according to an embodiment of the present disclosure may identify the selection region 930 of the intraoral image 900, based on location information about a plurality of points located in a region determined by the 3D brush 920 and location information about a plurality of points of the intraoral image 900. For example, the intraoral image processing apparatus 300 may identify at least one boundary where the region determined by the 3D brush 920 and the intraoral image 900 overlap each other, and identify the selection region 930, based on the identified at least one boundary. The region determined by the 3D brush 920 may denote a surface region of the 3D brush 920. The selection region 930 may correspond to a region where even curved portions of surfaces of the tooth 911 and the tooth 912 are minutely represented. Also, the intraoral image processing apparatus 300 may display the at least one boundary of the selection region 930 in a pre-set color, and display a region of the selection region 930 excluding the at least one boundary by blending a color of the tooth 911, a color of the tooth 912, and the pre-set color. Accordingly, the intraoral image processing apparatus 300 may emphasize a region of the intraoral image 900 selected by the user by displaying the selection region 930 through the display 310.

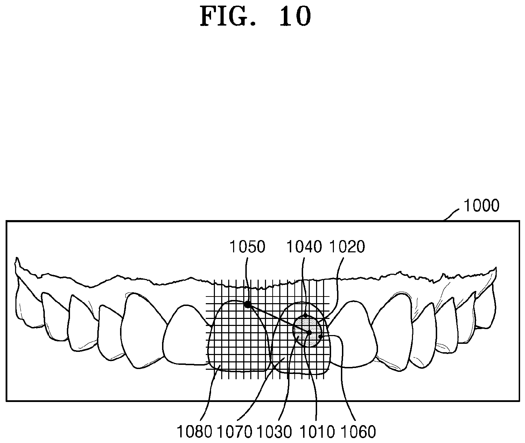

FIG. 10 is a reference diagram for describing operations of identifying the at least one boundary of the selection region of the intraoral image.

Referring to FIG. 10, an embodiment of identifying, from an intraoral image 1000, at least one boundary 1020 of a selection region 1030 is illustrated.

The intraoral image processing apparatus 300 according to an embodiment of the present disclosure may identify a reference point 1010 from among a plurality of points located on a surface of a tooth 1070 that is an object. The intraoral image processing apparatus 300 may determine a 3D brush according to a radius determined based on the reference point 1010 and at least one piece of distance information. Accordingly, the intraoral image processing apparatus 300 may identify the at least one boundary 1020 where the determined 3D brush and the tooth 1070 of the intraoral image 1000 overlap each other, and determine the selection region 1030, based on the at least one boundary 1020.

For example, the at least one boundary 1020 may include points separated from the reference point 1010 by a pre-set radius. Referring to FIG. 10, a distance between a point 1040 and the reference point 1010 may be equal to a pre-set radius r. Similarly, a plurality of points of which distances to the reference point 1010 are identical to the pre-set radius r from among a plurality of points located on a surface of the intraoral image 1000 may be included in the at least one boundary 1020.

Also, referring to FIG. 10, a plurality of points located outside the at least one boundary 1020 may denote points of which distances to the reference point 1010 are greater than the pre-set radius r. For example, a distance between a point 1050 located at a tooth 1080 besides the tooth 1070 and the reference point 1010 may be greater than the pre-set radius r. Thus, the point 1050 may be a point located outside the selection region 1030. A plurality of points located inside the at least one boundary 1020 may denote points of which distances to the reference point 1010 are less than the pre-set radius r. Referring to FIG. 10, a distance between a point 1060 and the reference point 1010 may be less than the pre-set radius r. Accordingly, the point 1060 may be a point located inside the selection region 1030.

The intraoral image processing apparatus 300 may output a plurality of points separated from the reference point 1010 by the pre-set radius r, from among the plurality of points located on the surface of the intraoral image 1000, in a pre-set color. In detail, referring to FIG. 10, the intraoral image processing apparatus 300 may output a plurality of points of which distances to the reference point 1010 are less than the pre-set radius r, from among the plurality of points located on the surface of the intraoral image 1000, transparently by blending a color of the tooth 1070 and the pre-set color.

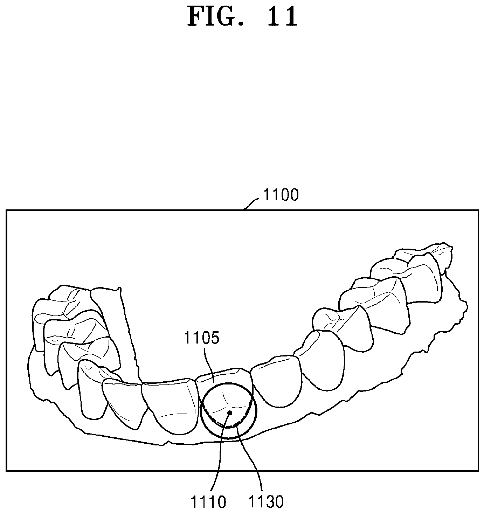

FIG. 11 is a reference diagram for describing an embodiment of identifying the at least one object of the intraoral image, based on the location information of the reference point.

According to an embodiment of identifying at least one object of an intraoral image 1100, the intraoral image processing apparatus 300 may identify the at least one object of the intraoral image 1100 according to color information corresponding to location information about a reference point 1110. For example, a plurality of objects included in the intraoral image 1100, such as teeth and gums, may have different color information depending on types of objects, and such color information may be stored in a memory 320 together with location information, in the form of a point cloud for a plurality of points located in the intraoral image 1100.

Referring to FIG. 11, the intraoral image processing apparatus 300 may identify that an object where the reference point 1110 is located is a tooth 1105, based on color information of the reference point 1110. Also, the intraoral image processing apparatus 300 may identify at least one boundary 1130 of the object where the reference point 1110 is located, based on color information of the tooth 1105 and color information of another object. However, an embodiment is not limited thereto, and the intraoral image processing apparatus 300 may identify curve information between points of the intraoral image 1100 according to location information, and identify that the object where the reference point 1110 is located is the tooth 1105.

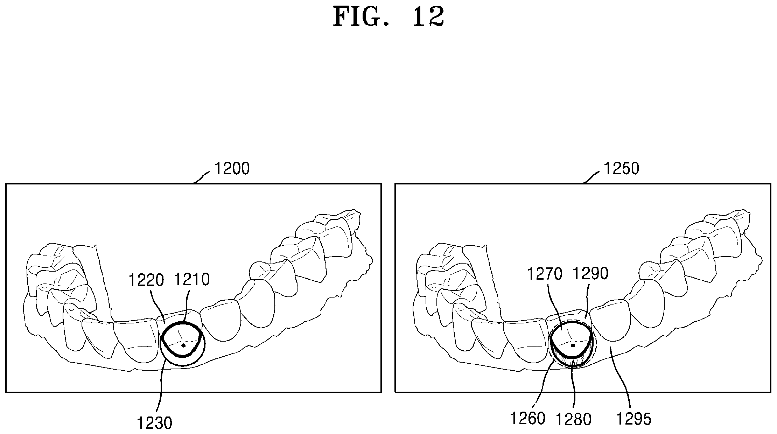

FIG. 12 is a reference diagram for describing an embodiment of identifying the selection region, further based on the region of the identified at least one object followed by FIG. 11, and an embodiment of displaying the selection region in a different color according to the identified at least one object.

The intraoral image processing apparatus 300 may display the selection region of the intraoral image according to various embodiments, based on the at least one object identified in FIG. 11.

Referring to FIG. 12, the intraoral image processing apparatus 300 may identify a selection region 1210 of an intraoral image 1200, further based on identified at least one object of the intraoral image 1200. In detail, the intraoral image processing apparatus 300 may identify the selection region 1210 of the intraoral image 1200, according to location information about a plurality of points of a brush 1230, location information about a plurality of points of the intraoral image 1200, and the identified at least one object of the intraoral image 1200. The selection region 1210 is identified considering the identified at least one object, and thus a partial boundary of the selection region 1210 may correspond to a boundary between a gum and a tooth 1220 that is an object.

Accordingly, the intraoral image processing apparatus 300 may provide a further suitable selection region to a user by displaying, on the display 310, the selection region 1210 identified by also considering the boundary between the tooth 1220 and the gum.

According to another embodiment of displaying the selection region of the intraoral image, referring to FIG. 12, the intraoral image processing apparatus 300 may display a selection region in different colors according to the identified at least one object of an intraoral image 1250. In detail, the intraoral image processing apparatus 300 may identify the selection region, based on location information about a plurality of points of a region determined by a brush 1260 and location information about a plurality of points of the intraoral image 1250. Also, the intraoral image processing apparatus 300 may display the selection region in different colors according to at least one object included in the selection region. For example, as shown in FIG. 12, the intraoral image processing apparatus 300 may display, in a first color, a region 1270 corresponding to a tooth 1290 among the selection region in the intraoral image 1250, and display, in a second color, a region 1280 corresponding to a gum 1295 among a region in the intraoral image 1250. In other words, the intraoral image processing apparatus 300 may display the region 1270 and the region 1280 in different colors, based on a boundary between the tooth 1290 and the gum 1295.

Accordingly, the intraoral image processing apparatus 300 may provide a further suitable selection region to the user by displaying, on the display 310, a region of the intraoral image 1250 by also considering the boundary between the tooth 1290 and the gum 1295.

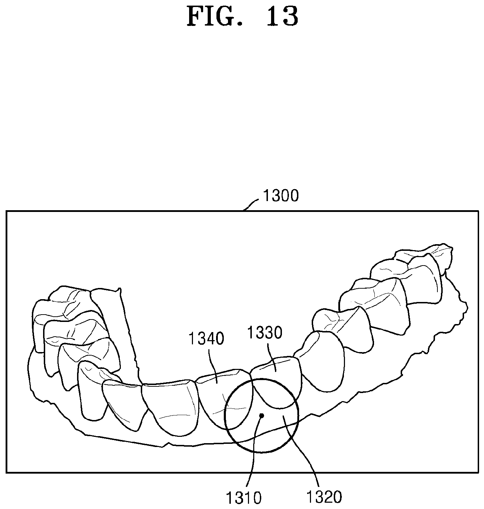

FIG. 13 is a reference diagram for describing an example of identifying the at least one object of the intraoral image, based on the location information of the reference point.

According to an embodiment of identifying at least one object of an intraoral image 1300, the intraoral image processing apparatus 300 may identify the at least one object of the intraoral image 1300 according to color information corresponding to location information about a reference point 1310. The intraoral image processing apparatus 300 may identify that an object where the reference point 1310 is located is a gum 1320, based on color information of the reference point 1310. Also, the intraoral image processing apparatus 300 may identify at least one boundary of the object where the reference point 1310 is located, based on color information about the gum 1320 and color information about other objects (e.g., a tooth 1330 and a tooth 1340). In detail, the at least one boundary may denote boundaries between the tooth 1330, the tooth 1340, and the gum 1320.

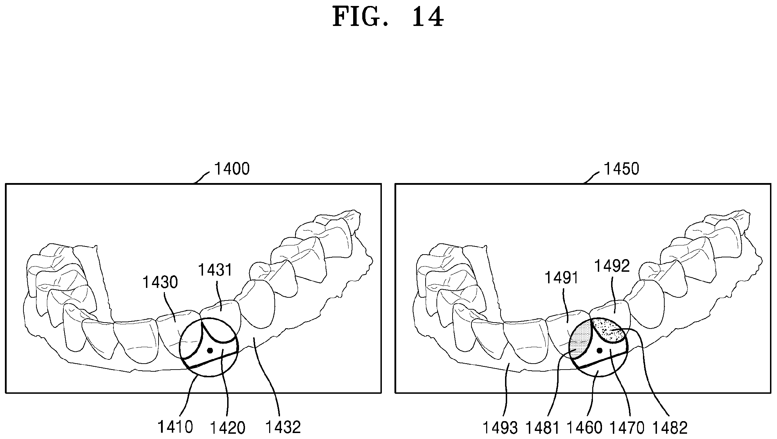

FIG. 14 is a reference diagram for describing an embodiment of identifying the selection region, further based on a region of the identified at least one object followed by FIG. 13, and an embodiment of displaying the selection region in a different color according to the identified at least one object.

The intraoral image processing apparatus 300 may display the selection region of the intraoral image according to various embodiments, based on the at least one object identified in FIG. 13.

According to an embodiment of displaying the selection region of the intraoral image, referring to FIG. 14, the intraoral image processing apparatus 300 may identify a selection region 1420 of an intraoral image 1400, further based on identified at least one object of the intraoral image 1400. In detail, the intraoral image processing apparatus 300 may identify the selection region 1420 of the intraoral image 1400, according to location information about a plurality of points of a region determined by a brush 1410, location information about a plurality of points of the intraoral image 1400, and the identified at least one object of the intraoral image 1400. As shown in FIG. 14, a partial boundary of the selection region 1420 may correspond to boundaries between a gum 1432 and teeth (may include a tooth 1430 and a tooth 1431) that are objects. Also, the selection region 1420 may not include a region where there is no point data of the intraoral image 1400.

Accordingly, the intraoral image processing apparatus 300 may provide a further suitable selection region according to a user input, by displaying, on the display 310, the selection region 1420 identified by also considering the boundaries between the gum 1432 and the teeth (may include the tooth 1430 and the tooth 1431). For example, the intraoral image processing apparatus 300 may display, on the display 310, the selection region 1420 by emphasizing only a portion corresponding to the gum 1432.

According to another embodiment of displaying the selection region of the intraoral image, referring to FIG. 14, the intraoral image processing apparatus 300 may display a selection region 1470 in different colors according to identified at least one object of an intraoral image 1450. In detail, the intraoral image processing apparatus 300 may identify the selection region 1470, based on pieces of location information about pluralities of points of a brush 1460 and the intraoral image 1450. Also, the intraoral image processing apparatus 300 may display the selection region 1470 in different colors according to at least one object included in the selection region 1470. For example, as shown in FIG. 14, the intraoral image processing apparatus 300 may display, in a first color, a region 1481 corresponding to a tooth 1491 among the selection region 1470 in the intraoral image 1450, display, in a second color, a region 1482 corresponding to a tooth 1492 among the selection region 1470 in the intraoral image 1450, and display, in a third color, a region corresponding to a gum 1493 among the selection region 1470 in the intraoral image 1450. The region corresponding to the gum 1493 may correspond to a region obtained by excluding the region 1481 and the region 1482 from the selection region 1470. In other words, the intraoral image processing apparatus 300 may display a region 1470 in different colors based on boundaries between the teeth (may include the tooth 1491 and the tooth 1492) and the gum 1493. Accordingly, the intraoral image processing apparatus 300 may identify the tooth 1491, the tooth 1492, and the gum 1493, which are at least one object in the selection region 1470, and display the selection region 1470 in different colors according to the tooth 1491, the tooth 1492, and the gum 1493. Accordingly, the intraoral image processing apparatus 300 may provide a further suitable selection region to the user by displaying, on the display 310, a region of the intraoral image 1450 by also considering the boundaries between the tooth 1491, the tooth 1492, and the gum 1493.

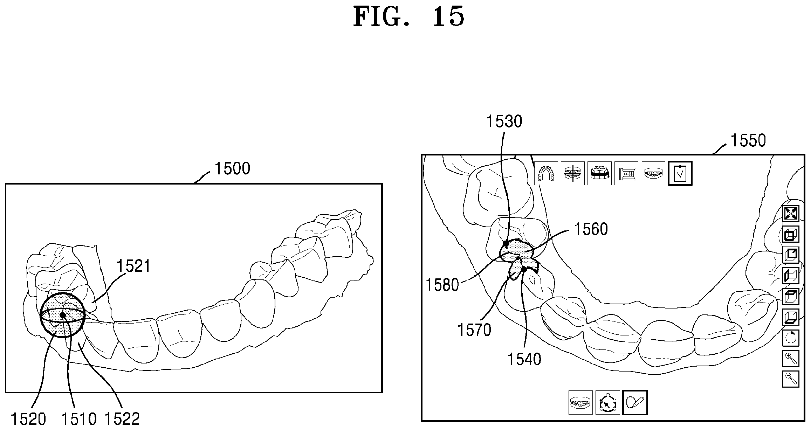

FIG. 15 is a reference diagram for describing an embodiment of displaying the selection region in the intraoral image, when the selection region is identified based on a 3D brush.

Referring to FIG. 15, an embodiment in which the intraoral image processing apparatus 300 displays the selection region of the intraoral image is illustrated.

The intraoral image processing apparatus 300 according to an embodiment of the present disclosure may identify the selection region according to the pieces of location information about the reference point and plurality of points of the intraoral image, and display the selection region of the intraoral image. For example, referring to FIG. 15, the intraoral image processing apparatus 300 may identify a reference point 1510 of an intraoral image 1500. When a brush is a sphere, the intraoral image processing apparatus 300 may identify a sphere 1520 that is a 3D brush, based on a pre-set distance to the reference point 1510. The intraoral image 1500 is an intraoral image corresponding to a front portion of teeth, and thus the user may be unable to accurately identify whether a rear portion of a teeth 1522 and the sphere 1520 that is a 3D brush overlap each other.

An intraoral image 1550 may be an image in which it is clearly identified whether the rear portion of the teeth 1522 and the sphere 1520 that is a 3D brush of the intraoral image 1500 overlap each other.

The intraoral image processing apparatus 300 according to an embodiment of the present disclosure may identify a selection region 1570 according to pieces of location information about a reference point and plurality of points of the intraoral image 1550 , and display the selection region 1570 of the intraoral image 1550. For example, a boundary of the selection region 1570 may include a point A 1530 and a point B 1540. In detail, the point A 1530 located on the teeth 1521 and the point B 1540 located on the teeth 1522 of the intraoral image 1550 may each be a point located at the top of a front portion of a tooth. Accordingly, a sub-region 1560 located at rear portions of the teeth 1521 and the teeth 1522, and a boundary 1580 corresponding to the sub-region 1560 may be regions of teeth that are not observed from the front. Thus, through the intraoral image 1550, the intraoral image processing apparatus 300 may accurately identify that the sub-region 1560 located at the rear portions of the teeth 1521 and the teeth 1522 is included in the selection region 1570 in the intraoral image 1550, which is determined by the sphere 1520 that is a 3D brush. Accordingly, by identifying a selection region in an intraoral image through the sphere 1520 that is an example of a 3D brush, the user may identify even the sub-region 1560 that is a region not accurately observed from a front portion of teeth, as a portion of the selection region 1570 in the intraoral image.

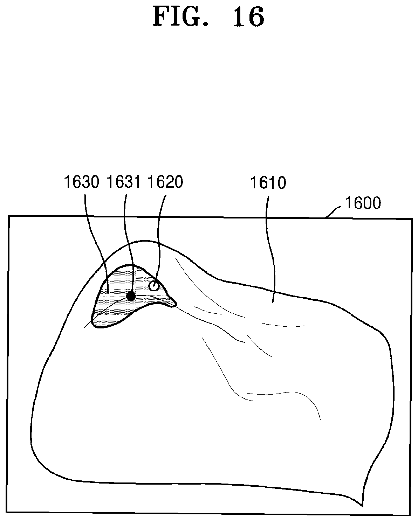

FIG. 16 is a reference diagram for describing an embodiment of displaying the selection region where a hole is displayed, when the hole is in a region identified based on a 3D brush.

Referring to FIG. 16, the intraoral image processing apparatus 300 may identify a hole 1620 located inside a selection region 1630 identified according to a reference point 1631, and display the hole 1620 in the selection region 1630.

A hole of an intraoral image according to an embodiment of the present disclosure may be generated during a dental treatment or may denote a region where point data does not exist due to a technical flaw. When a hole is identified in a selected region, the intraoral image processing apparatus 300 may need to provide information about the hole to the user by displaying the hole in the selected region.

The intraoral image processing apparatus 300 may identify the hole 1620 present in a teeth 1610 corresponding to location information of the reference point 1631. In detail, the intraoral image processing apparatus 300 may determine, as the hole 1620 of the selection region 1630, at least one region where there is no point data, from among a plurality of points located in the selection region 1630.

Accordingly, the intraoral image processing apparatus 300 may display the hole 1620 together with the selection region 1630, thereby displaying, to the user, the selection region 1630 of a further suitable intraoral image 1600.

A method of processing an intraoral image, according to an embodiment of the present disclosure, may be recorded on a computer-readable recording medium by being implemented in the form of program commands executed by using various computers. Also, an embodiment of the present disclosure may include a computer-readable storage medium having recorded thereon at least one program including at least one instruction for executing the method of processing an intraoral image.

In the present specification, a machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

According to an embodiment, a method according to various embodiments in the present specification may be provided by being included in a computer program product. The computer program products are products that can be traded between sellers and buyers. The computer program product may be distributed in the form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

The above description of the present disclosure is provided for illustration, and it will be understood by one of ordinary skill in the art that various changes in form and details may be readily made therein without departing from essential features and the scope of the present disclosure as defined by the following claims. Accordingly, the embodiments described above are examples in all aspects and are not limited. For example, each component described as a single type may be implemented in a distributed manner, and similarly, components described as distributed may be implemented in a combined form.

The scope of the present disclosure is defined by the appended claims rather than the detailed description, and all changes or modifications within the scope of the appended claims and their equivalents will be construed as being included in the scope of the present disclosure.

## Claims

1. A method of identifying a selection region in an intraoral image, the method comprising:
obtaining the intraoral image;
determining a reference point of the intraoral image;
determining a brush, based on the reference point and at least one piece of distance information;
identifying a region of the intraoral image, which overlaps a region determined by the brush, as the selection region; and
displaying the selection region in the intraoral image.

2. The method of claim 1, wherein the identifying of the selection region comprises:
identifying at least one boundary where the region determined by the brush and the intraoral image overlap each other, based on location information of a plurality of points of the region determined by the brush and location information of a plurality of points of the intraoral image; and
identifying the selection region, based on the at least one boundary.

3. The method of claim 2, wherein the selection region comprises the at least one boundary and a region of the intraoral image, which is located within the identified at least one boundary.

4. The method of claim 1, wherein the displaying of the selection region comprises displaying the selection region by emphasizing at least one boundary of the selection region.

5. The method of claim 4, wherein the displaying of the selection region by emphasizing the at least one boundary of the selection region comprises displaying the at least one boundary of the selection region in a pre-set color, wherein a region of the intraoral image, which is located within the at least one boundary, is displayed by overlapping or blending a color of the intraoral image and the pre-set color.

6. The method of claim 1, wherein the identifying of the selection region comprises:
identifying at least one object of the intraoral image, based on location information of the reference point; and
identifying the selection region, further based on a region of the identified at least one object.

7. The method of claim 1, wherein the displaying of the selection region comprises:
identifying at least one object of the intraoral image, which is included in the selection region; and
displaying the selection region in a different color according to the at least one object.

8. The method of claim 1, wherein the at least one piece of distance information comprises information about a distance between the reference point and another point of the intraoral image.

9. An apparatus for processing an intraoral image, the apparatus comprising:
a display displaying an intraoral image;
a memory storing one or more instructions; and
at least one processor configured to execute the one or more instructions to:
obtain the intraoral image;
determine a reference point of the intraoral image;
determine a brush, based on the reference point and at least one piece of distance information;
identify a region of the intraoral image, which overlaps a region determined by the brush, as a selection region; and
control the display to display the selection region of the intraoral image.

10. The apparatus of claim 9, wherein the at least one processor is further configured to execute the one or more instructions stored in the memory to:
identify at least one boundary where the region determined by the brush and the intraoral image overlap each other, based on location information of a plurality of points of the region determined by the brush and location information of a plurality of points of the intraoral image; and
identify the selection region, based on the at least one boundary.

11. The apparatus of claim 10, wherein the selection region comprises the at least one boundary and a region of the intraoral image, which is located within the identified at least one boundary.

12. The apparatus of claim 9, wherein the at least one processor is further configured to execute the one or more instructions stored in the memory to control the display to display the selection region by emphasizing at least one boundary of the selection region.

13. The apparatus of claim 12, wherein the at least one processor is further configured to execute the one or more instructions stored in the memory to control the display to display the at least one boundary of the selection region in a pre-set color, wherein a region of the intraoral image, which is located within the at least one boundary, is displayed by overlapping or blending a color of the intraoral image and the pre-set color.

14. The apparatus of claim 9, wherein the at least one processor is further configured to execute the one or more instructions stored in the memory to:
identify at least one object of the intraoral image, based on location information of the reference point; and
identify the selection region, further based on a region of the identified at least one object.

15. The apparatus of claim 9, wherein the at least one processor is further configured to execute the one or more instructions stored in the memory to:
identify at least one object of the intraoral image, which is included in the selection region; and
control the display to display the selection region in a different color according to the at least one object.

16. The apparatus of claim 9, wherein the at least one piece of distance information comprises information about a distance between the reference point and another point of the intraoral image.

17. A computer-readable recording medium having recorded thereon a program for executing, on a computer, the method of any one of claims 1 to 8.
